# FASCICULE DE BREVET EUROPEEN

(11) **EP 0 377 204 B1**
(45) Date de publication et mention de la délivrance du brevet: **29.06.1994**
(21) Numéro de dépôt: 89123956.8
(22) Date de dépôt: 27.12.1989
(51) Int. Cl.: H04J 3/16, H04L 12/00

(54) **Système d'émission de trames HDLC sur canal de type MIC, à circuit HDLC unique et mémoire tampon de transposition**
System für das Senden von HDLC-Rahmen auf einem PCM-Kanal mit einer einzelnen HDLC-Anordnung und Transpositionspufferspeicher
System for the transmission of HDLC frames on a PCM channel using a single HDLC circuit, and transposition buffer memory

(30) Priorité: 30.12.1988 FR 8817504
(43) Date de publication de la demande: 11.07.1990
(73) Titulaire: ALCATEL CIT, 75008 Paris (FR)
(72) Inventeur: Le Corre, Noel, F-91240 Saint Michel (FR)
(74) Mandataire: Weinmiller, Jürgen

(56) Documents cités:
- EP-A- 0 100 092
- EP-A- 0 275 743
- FR-A- 2 516 730

## Description

Le domaine de l'invention est celui de la transmission de données, dans le secteur des télécommunications, selon le protocole de normalisation ISO, et plus particulièrement selon les niveaux 1 et 2 de la norme.

Le mode de réalisation particulier qui est à l'origine du développement de l'invention concerne un émetteur HDLC (sigle anglais pour High level Data Link Control : Contrôle de haut niveau pour liaison de données) à 32 voies multiplexées sur une liaison MIC, s'intégrant dans un coupleur MIC associé par exemple à un commutateur de données.

Toutefois, bien entendu, la portée de l'invention s'étend à d'autres modes de réalisation, dans lesquels on peut trouver un formatage de trame de niveau 2 ISO (substitutif de l'HDLC) combiné à un mode de multiplexage de plusieurs voies formatées sur la liaison de transmission (mode substitutif du MIC).

A titre d'exemple d'utilisation d'un multiplexage MIC de trames HDLC, on peut citer le réseau TRANSPAC (marque déposée), fonctionnant suivant le protocole X25.

Le codage HDLC consiste à formater les données en trames identifiables successives, comportant chacune un symbole sur deux octets de validation de la trame (signature établie en fonction des bits de la trame), vérifié à la réception.

Le mode de transmission MIC assure un multiplexage temporel de N voies logiques indépendantes sur une seule paire physique de transmission, sous forme de trames MIC identifiées chacune par un octet de début/fin de trame MIC. Dans chaque trame MIC, chaque voie se voit réserver un même octet de rang prédéterminé.

L'insertion des trames HDLC dans le format MIC à l'émission, puis la récupération de chaque voie à la réception, suppose de disposer à chaque bout de la chaîne de transmission d'un système spécifique. L'invention concerne la partie émission d'un tel système.

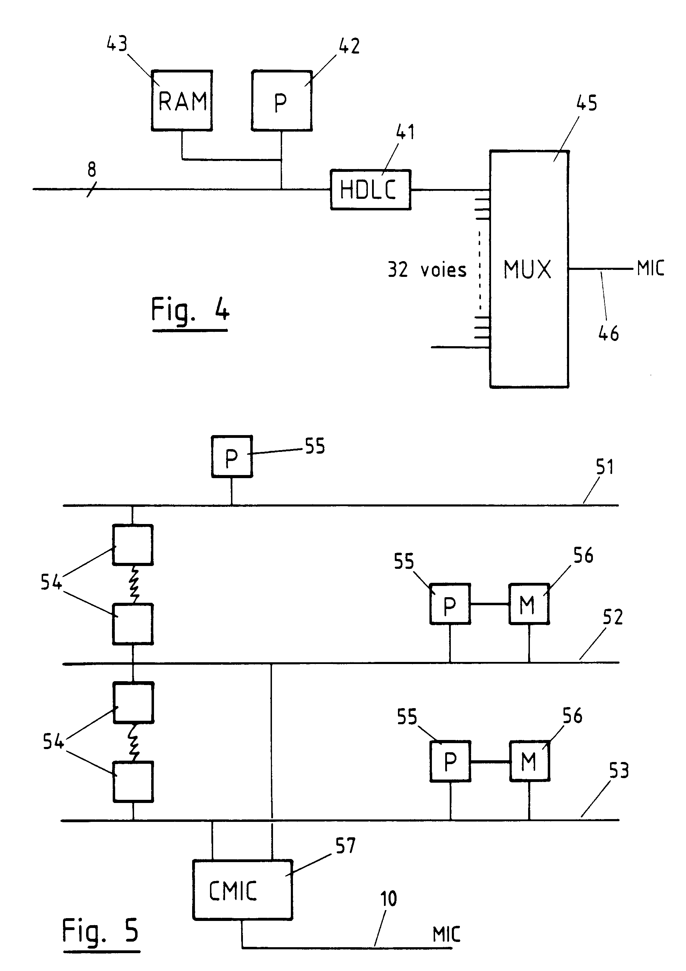

On connaît déjà des systèmes d'émission de trames HDLC sur canal de type MIC constitués soit de 16 ou 32 émetteurs distincts, soit de multiples automates associés chacun à une mémoire RAM de 16 ou 32 mots. Ainsi, dans le système connu représenté en figure 4, on effectue le formatage HDLC, voie par voie, au moyen d'une ligne spécifique pour chacune des voies comprenant d'une part un circuit HDLC propre 41, et d'autre part un processeur propre 42 associé à une mémoire tampon 43. Chacune des lignes 44 correspondant à une voie distincte alimente un multiplexeur commun 45 qui assure la construction de la trame MIC 46.

Ce système existant est parfaitement opérationnel, mais présente l'inconvénient de la multiplication des composants (autant de composants que de voies), et de la complexité de gestion qui en résulte.

Ces inconvénients sont particulièrement pénalisants pour le développement de systèmes de commutation destinés à gérer un très grand nombre de lignes transportant des débits importants de données numériques. Jusqu'à récemment, en effet, les liaisons MIC à 32 voies n'acheminaient que quelques voies logiques (2 par exemple), les autres voies étant des voies de parole. Il était donc envisageable, voire nécessaire, de traiter séparément chaque voie, la multiplication des composants 41, 42, 43 sur quelques voies parallèles seulement étant compensé par la souplesse de configuration ainsi permise.

Actuellement, on est amené à développer des systèmes d'émission/réception de type MIC comprenant exclusivement des voies numériques. On peut citer à titre d'exemple les PTS (Points de Transfert Semaphore) destinés à être installés sur le réseau commuté français, qui doivent par exemple avoir une capacité de traitement de l'ordre de 500 voies HDLC avec 64 kbits/s de débit.

La numérisation croissante du réseau, ainsi que l'augmentation des débits permettant la mise en place de services de plus en plus performants (RNIS) appellent clairement des systèmes MIC/HDLC plus performants.

L'invention a pour objectif de fournir un système qui puisse faire face à un tel cahier des charges, avec une économie du nombre de composants utilisés ,et notamment des composants de formatage HDLC. Le système selon l'invention permet en outre d'économiser l'utilisation d'un multiplexeur des données sur la liaison MIC.

L'invention permet également d'atteindre une plus grande compacité du système, avec un coût de revient et une consommation moindres. En outre, l'interface est simplifiée avec le niveau supérieur.

L'invention permet également de travailler à une vitesse élevée sans risque de famine sur la liaison MIC.

En outre, la conception du système le rend compatible avec des protocoles distincts du formatage HDLC, par simple substitution d'un seul circuit par émetteur 16 voies, ou 32 voies.

Ces objectifs, ainsi que d'autres qui apparaîtront par la suite, sont atteints à l'aide d'un système d'émission de trames HDLC sur canal de type MIC multivoies, le système comprenant des premiers moyens de construction de trames HDLC pour chaque voie de transmission, alimentant des seconds moyens d'insertion des trames HDLC dans un format MIC à multiplexage temporel,
caractérisé en ce que lesdits premiers et seconds moyens sont constitués par une mémoire tampon unique de transposition, à cycle de lecture distinct du cycle d'écriture, coopérant avec un circuit unique monovoie de formatage des trames HDLC, ladite mémoire étant accédée en écriture par lesdites trames HDLC formatées, et étant accédée en lecture sous commande de moyens de prélevement sélectif dans la mémoire des données de construction des blocs successifs des voies entrelacées de la trame MIC.

Ainsi, on utilise un circuit unique de formatage HDLC, ainsi qu'une mémoire unique pour le système émission.

De façon avantageuse, ladite mémoire tampon comprend au moins N segments de mémoire du type FIFO tournants correspondant aux N voies acheminées sur le canal MIC. De cette façon, chacun desdits segments de mémoire comporte un pointeur en écriture distinct, mais un pointeur unique commun de lecture pour l'ensemble des segments.

Préférentiellement, le système inclut un module d'alimentation sélective du circuit HDLC, ledit module comprenant un processeur recevant les informations fournies par les pointeurs d'écriture et de lecture de ladite mémoire tampon. De cette façon, le processeur gère le remplissage des segments de mémoire de façon à éviter la famine de la liaison MIC. Il comporte par exemple une logique d'alimentation sélective du circuit HDLC avec des données permettant de remplir en priorité le segment le plus vide de la mémoire tampon, au moins lorsque le nombre de données stockées dans ledit segment de mémoire est inférieur à un seuil prédéterminé.

Avantageusement, ledit processeur du module d'alimentation du circuit HDLC coopère avec une mémoire locale de stockage temporaire des données. Le processeur du module d'alimentation et le circuit HDLC unique coopèrent alors préférentiellement selon une relation maître/esclave respectivement, à travers un bus dont le débit est déterminé par les accusés de réception émis par le circuit unique HDLC.

Selon une caractéristique importante de l'invention, le processeur du module d'alimentation fournit au circuit HDLC les octets de données accompagnés d'informations identifiant les octets courants, les octets de fin de trame, et les octets de synchronisation. L'identification d'un octet de fin de trame commande l'opération de formatage HDLC correspondante. D'autre part, l'identification des octets de synchronisation pilote des moyens de désactivation et d'évitement du circuit HDLC, de façon à permettre le chargement de l'octet de synchronisation de chaque trame MIC directement dans la mémoire tampon.

De façon à améliorer encore la souplesse du système, notamment vis-à-vis des à-coups d'alimentation des trames source, il comprend avantageusement des moyens de masquage des coups d'horloge pilotant ledit circuit HDLC et/ou les moyens de séquencement de l'écriture dans ladite mémoire tampon en cas de famine d'alimentation des données au circuit HDLC.

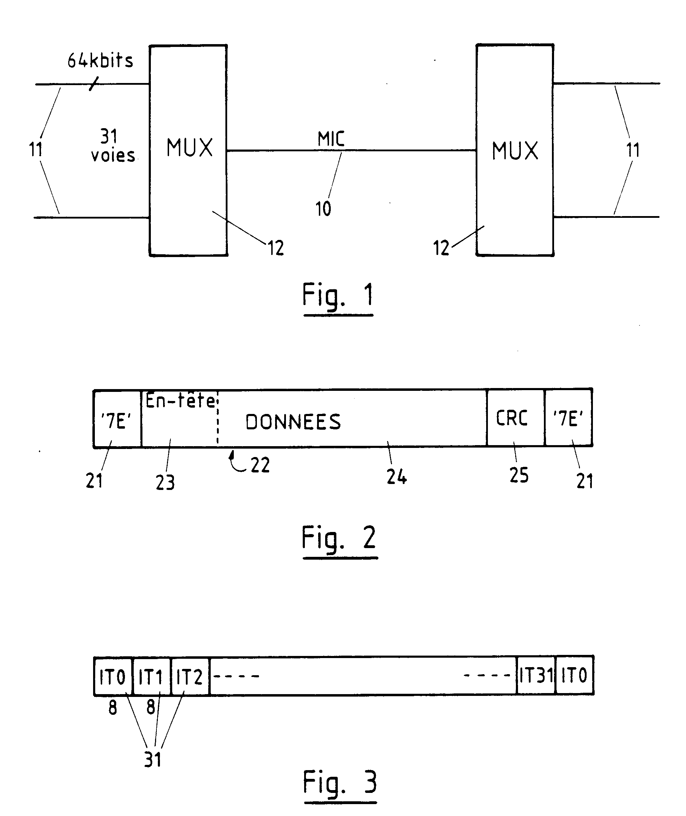

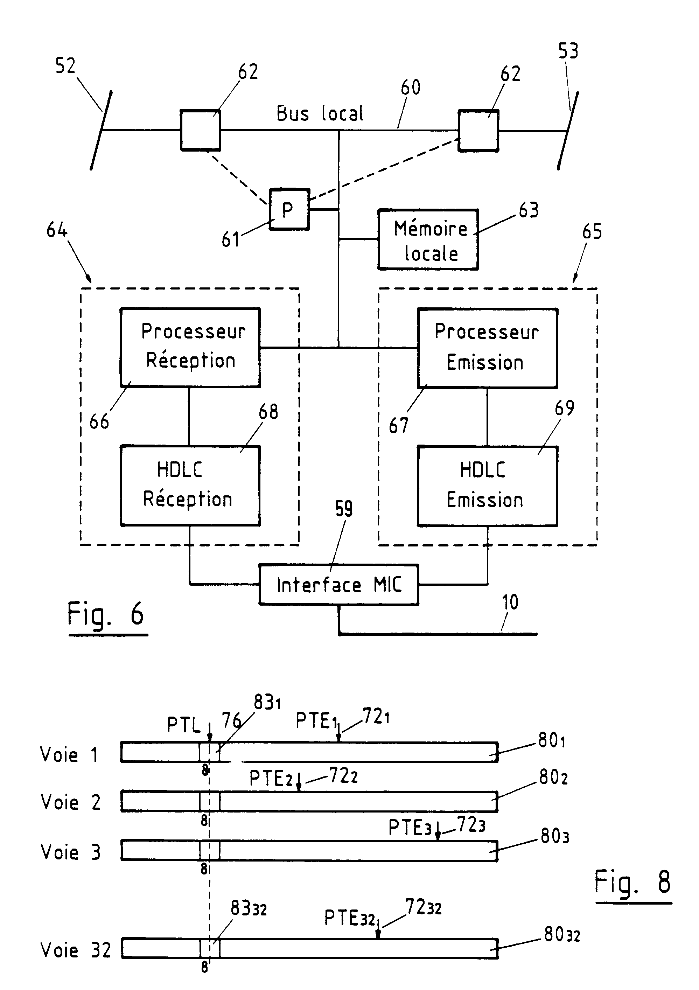

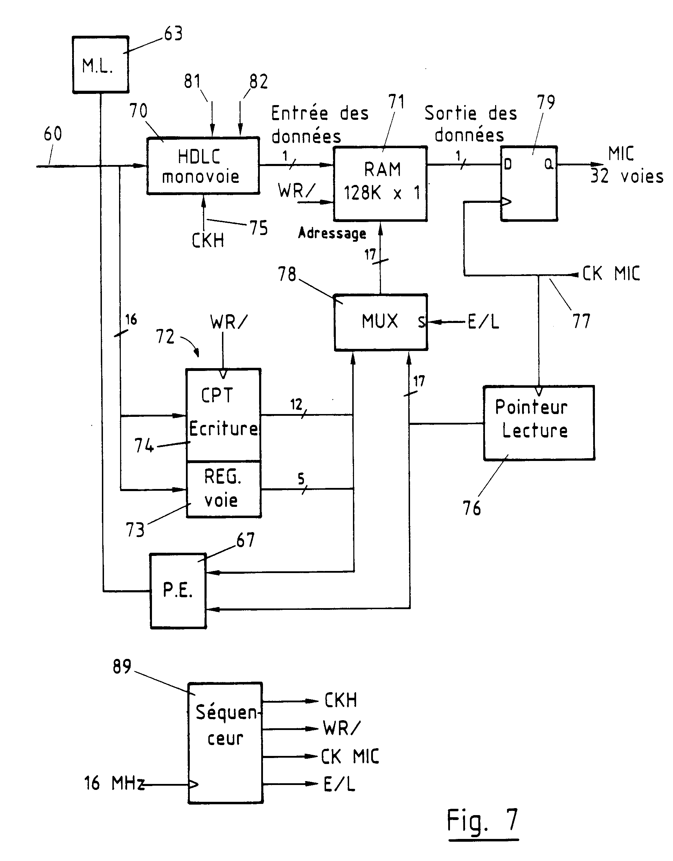

D'autres caractéristiques et avantages de l'invention apparaîtront à la lecture suivante de la description d'un mode de réalisation préférentiel donné à titre illustratif et non limitatif, et des dessins annexés, dans lesquels :
. la figure 1 schématise la chaîne de transmission d'une liaison MIC à 31 voies, dans laquelle s'inscrit le système d'émission suivant l'invention ;
. la figure 2 schématise la structure d'une trame HDLC ;
. la figure 3 schématise la structure d'une trame MIC ;
. la figure 4 illustre un mode de réalisation connu d'un système d'émission de trames HDLC sur canal de type MIC, avec traitement HDLC séparé pour chaque voie ;
. la figure 5 schématise l'implantation d'un coupleur MIC sur un commutateur de données ;
. la figure 6 représente la structure d'un coupleur MIC, auquel est applicable le système d'émission de l'invention ;
. la figure 7 représente la structure d'un mode de réalisation préférentiel de l'opérateur HDLC du système d'émission de l'invention ;
. la figure 8 schématise la structure de la mémoire unique de transposition de l'opérateur de la figure 7.

Le mode de réalisation qui va être décrit ci-après concerne une liaison 10 de type MIC, construite à partir de 31 voies HDLC 11 multiplexées (12) avec une 32ème voie de synchronisation (norme MIC) comme schématisé en figure 1.

A titre d'exemple, on peut considérer que les voies HDLC présentent un débit de 64 kbits/s avec une liaison MIC de type MIC CEPT (2,048 Mbits/s), et une procédure de transmission de type CCITT n7.

La figure 2 représente la structure d'une trame HDLC. On peut identifier :
. un fanion "7E" 21 pour séparer les trames. Le code "7E" correspond à la séquence binaire O 1 1 1 1 1 1 0.
. N octets de données 22. Le nombre N d'octets est fonction du logiciel, et est variable (par exemple 1 000 octets maximum). Parmi ces octets de données, on peut distinguer d'une part l'entête de message 23, constituée par exemple par un numéro de trame, un numéro de la dernière trame émise par le système distant, et une indication de longueur du message dans la trame HDLC, et d'autre part le corps du message proprement dit 24 ;
. deux octets de validation de trame. Ces octets sont symbolisés par le terme CRC (Cyclic Redundancy Check: contrôle par redondance cyclique), et leur valeur est fonction des bits de la trame. Ces deux octets sont ainsi par exemple constitués par le reste de la division de la trame par un polynôme prédéterminé.

Les trames HDLC sont émises successivement sur chaque voie, avec un séparateur de trame 21 entre chaque trame successive. En cas d'absence de trame, on émet en continu des fanions séparateurs 21.

La construction de ces trames HDLC à partir de séquences de données source, impose d'utiliser dans l'émetteur un module spécifique (USART : Universal Synchronous/Asynchronous Receiver/Transmitter : Emetteur/Récepteur universel synchrone/asynchrone), chargé notamment des fonctions suivantes :
. supprimer les occurrences de symbole "7E" à l'intérieur de la trame de données, de façon à éviter toute ambiguïté avec les fanions de fin de trame 21. Cette fonction est établie au moyen de la règle dite "de transparence", qui consiste à insérer des zéros dans la séquence de données utile dès qu'on a détecté cinq bits successifs à la valeur 1 ;
. calcul des deux octets de validation CRC 25, pour les insérer en fin de trame ;
. insertion des fanions de séparation de trame 21 entre chaque trame HDLC.

Bien entendu, un composant symétrique est utilisé dans la partie réception, pour récupérer les données transmises, en réalisant les fonctions suivantes :
. détection et élimination des fanions de trame 21 ;
. vérification de l'adéquation entre la séquence de données utile transmise 22 et les deux octets de validation 25. En cas d'inadéquation, le récepteur se met en position "erreur", et commande par exemple une retransmission de la trame ;
. extraction des zéros insérés dans la trame, à l'émission, suivant la règle de transparence.

La structure d'une trame MIC est représentée en figure 3.

Le débit d'une trame MIC multiplexée, construite à partir de 32 voies de 64 Kbits/s, est de 32 X 64 = 2,048 Mbits/s. Les données sont émises par blocs successifs de 256 bits, se répétant sans fin, du type du bloc représenté en figure 3. Ce bloc est constitué de 32 intervalles de temps 31, de 8 bits chacun : ITO, IT1, ..., IT31. L'octet IT0 contient un code de synchronisation. Les octets IT1 à IT31 correspondent chacun à un canal de transmission différent. Du point de vue de l'émetteur ou du récepteur, chaque abonné voit donc ses données tronçonnées, et émises tous les 256 bits, en multiplexage avec les données des voies parallèles.

Le cas échéant, l'octet IT16 correspond à des données de signalisation, qui précisent l'utilisation de chacun des octets IT1, IT2, ...

Le mode de réalisation du système de l'invention va être décrit plus précisément en relation avec un commutateur de données tel que représenté en figure 5.

Un tel commutateur de données est par exemple constitué d'un système multiprocesseurs multibus, dans lequel on peut distinguer :
. un bus de gestion ;
. au moins un bus de commutation des trames, destiné à traiter les données reçues, et les regrouper, de façon à les réémettre vers des lignes d'émission adéquates ;
. des bus de raccordement aux lignes d'émission/réception.

Les bus 51, 52, 53 du système sont connectés les uns aux autres à travers des paires de coupleurs de bus 54, qui permettent aux processeurs 55 connectés à chaque bus de communiquer entre eux ou avec des modules esclaves tels que des mémoires 56.

La connexion à une liaison MIC 10 s'effectue à travers un coupleur MIC 57 préférentiellement raccordé en parallèle à deux bus 52, 53. Des deux interfaces du coupleur MIC 57 avec les bus 52, 53, une seule est active à un moment donné, sous contrôle d'un processeur de gestion 61 (Figure 6). L'activation de la seconde interface peut par exemple intervenir en cas de défaillance de la première, la double connexion du coupleur MIC 57 étant ainsi réalisée pour des raisons de sécurité.

La figure 6 représente la structure d'un coupleur MIC, du type dans lequel l'invention peut notamment être mise en oeuvre.

Le coupleur MIC est connecté à deux bus 52, 53 du commutateur de données au moyen de deux circuits d'isolement 62, du type des circuits tampon à trois états, pilotés par le processeur 61 de gestion.

Le processeur de gestion 61 comporte en outre d'autres fonctions :
. il coopère avec les processeurs connectés aux bus 52, 53, pour la gestion des trames source de données, et des taux d'erreur sur les voies HDLC ;
. il participe à la gestion de la mémoire locale 63 du coupleur MIC ;
. il contrôle l'encombrement et le débit du bus local 60 du coupleur MIC, et gère l'acheminement des données sur ce bus local 60 ;
. il gère les temporisations activées lors des transferts de données sur le bus, dans l'attente des accusés de réception ;
. il envoie des ordres de travail au processeur d'émission 67 sur la liaison MIC 10.

Le coupleur MIC comporte en outre d'une part une mémoire locale 63, et d'autre part deux branches de traitement 64, 65 correspondant respectivement au module de réception et au module d'émission du coupleur. Ces modules 64, 65 coopèrent avec une interface MIC commune 59, connectée à la liaison MIC 10. Chacun des modules 64, 65 comporte d'une part un processeur 66, 67, et d'autre part un circuit HDLC 68, 69, comportant les fonctions "USART" à l'émission ou à la réception, comme décrit plus haut.

L'invention concerne plus particulièrement la structure et le fonctionnement du module 65 en relation avec la mémoire locale 63, pour les opérations d'émission des trames HDLC sur la liaison MIC 10.

La figure 7 schématise l'ensemble des éléments principaux du système d'émission de l'invention.

On peut y distinguer :
. le processeur d'émission 67, et la mémoire locale 63 du coupleur MIC, formant le module d'alimentation du circuit HDLC 70 ;
. un opérateur HDLC monovoie unique 70 travaillant en temps partagé sur les 32 voies de la liaison MIC ;
. une mémoire de brassage monolitique 71 de 128 K bits qui stocke les trames ou les fanions issus du circuit HDLC 70 ;
. un pointeur écriture 72 constitué d'un registre 73 de 5 bits contenant le numéro de voie et d'un compteur 74 de 12 bits s'incrémentant au rythme de l'horloge émission 75 du circuit HDLC 70 ;
. un pointeur lecture 76 constitué d'un compteur binaire de 17 bits s'incrémentant au rythme de l'horloge MIC 77 ;
. un multiplexeur 78 qui brasse les adresses issues des deux pointeurs 72, 76 selon le type de cycle (lecture ou écriture) ;
. un séquenceur 89 qui pilote le multiplexage 78 et fournit les horloges des pointeurs 72, 76 et du circuit HDLC 70,
. une bascule 79 de mémorisation de l'état courant du bit envoyé vers la liaison MIC.

Le processeur 67 reçoit en outre les informations d'état des pointeurs d'écriture 72 et de lecture 76.

La structure de la mémoire 71 peut être décrite en relation avec la figure 8.

C'est une mémoire de 128 k x 1 bit à entrée et sortie séparées qui a un temps de cycle de 122 ns. Toutes les 448 ns, 3 cycles sont attribués à l'écriture et un cycle à la lecture : les cycles lecture sont toujours effectifs ce qui donne un train binaire de 2,048 Mbits/seconde. Les cycles écriture ne sont effectifs que pendant la durée des émissions de trames par le processeur. Cette mémoire est divisée en 32 blocs 80₁ à 80₃₂ de 4kbits chacun, chaque bloc étant affecté à une voie du MIC, et utilisé en mémoire tampon tournante. Le processeur 67 doit donc gérer pour chaque bloc 80₁ à 80₃₂ un pointeur écriture spécifique 72₁ à 72₃₂ de 12 bits mémorisant entre chaque opération d'écriture dans son bloc l'adresse du dernier bit écrit dans le bloc. Le pointeur lecture 76 est commun à tous les blocs car issu d'un compteur synchrone avec l'horloge du MIC 77 ; les poids faibles de ce compteur balayent les numéros de voie au rythme d'une voie tous les 8 bits conformément à la structure du MIC CEPT (figure 3) (voir table 1 plus loin).

Comme déjà mentionné, les pointeurs écriture 72 et lecture 76 sont lisibles par le processeur 67 ; c'est leur comparaison qui lui permet de connaître le remplissage d'un bloc de mémoire 80₁ - 80₃₂ et de savoir s'il peut émettre une nouvelle trame HDLC sur la voie correspondante. Pour ce faire, le processeur 67 est muni d'une logique d'alimentation qui sera détaillée plus loin.

Les étapes de l'émission d'une trame HDLC au moyen du système de la figure 7 sont alors les suivantes :
. le processeur 67 écrit le numéro de la voie sur laquelle il veut émettre la trame dans le registre 73 du pointeur d'écriture 72 ;
. il charge le compteur 74 du pointeur écriture 72 avec la valeur qu'il avait sauvegardée à la fin de la dernière émission de trame sur cette même voie ;
. il écrit ensuite la trame, octet par octet, dans le circuit HDLC 70 qui réalise l'insertion de "O" et calcule le CRC. L'émission se déroule à une vitesse moyenne de 6 Mbits par seconde avec blocage automatique de l'horloge émission si le microprocesseur n'a pas fourni assez vite l'octet suivant, selon un procédé de masquage décrit plus loin ;
. après écriture du dernier octet, le processeur 67 écrit la commande "fin de trame" qui provoque l'émission du CRC ;
. il scrute ensuite un indicateur "fin d'émission" qui lui indique qu'il peut relire et sauvegarder le pointeur écriture de la voie ;
. le processeur 67 peut ensuite passer à une autre voie.

Le débit du bus local 60 est déterminé par le circuit HDLC 70. Ce circuit HDLC coopère avec le processeur 67 selon une relation esclave/maître respectivement. A chaque réception d'un octet de données, le circuit HDLC 70 émet un accusé de réception en direction du processeur 67, qui va indirectement commander l'émission de l'octet suivant. Ce processus permet d'éviter le risque de saturation du circuit HDLC.

Le circuit HDLC comporte deux fils d'entrée 81, 82, qui, suivant leur état, lui fournissent une information identifiant les octets courants, les octets de fin de trame, et les octets de synchronisation qui lui sont transmis par le processeur 67. L'un des fils 81 porte par exemple l'information début/fin de message. Le fil 82 est activé au moment de l'émission de chaque octet de synchronisation IT0 de la trame MIC.

L'implantation du système de génération des octets IT0 au niveau du circuit HDLC permet de s'affranchir d'un circuit spécifique en sortie de l'opérateur de la figure 7, qui nécessiterait de prévoir un jeu de registres et un multiplexeur avant d'attaquer la liaison MIC. On concentre ainsi la complexité dans un seul élément, à savoir le processeur 67.

La commande spécifique d'émission de l'octet IT0, transmise par le fil 82, provoque la désactivation de l'algorithme de l'insertion de zéros du circuit HDLC 70, et donc en quelque sorte son contournement, ou son évitement, sans interrompre l'alimentation de la mémoire 71. Les octets IT0 sont stockés dans le bloc de mémoire spécifique de la mémoire 71, qui est balayée cycliquement par le pointeur de lecture commun 76.

Avantageusement, l'activation des fils 81 et 82 s'effectue à partir du contenu d'un registre de contrôle accompagnant le registre de données transmis par le processeur 67, pour chaque octet. Bien entendu, l'homme de métier pourra y substituer tout autre dispositif remplissant la même fonction.

La lecture de la mémoire 71 s'effectue, comme déjà mentionné, au moyen du pointeur de lecture unique 76. Le principe est de prélever l'octet 83₁ à 83₃₂ correspondant à la position du pointeur de lecture 76 dans chacun des blocs de mémoire 80₁ à 80₃₂ respectivement. La mémoire 71 fonctionne ainsi, d'une certaine manière, comme une mémoire de transposition, puisque l'écriture des octets s'effectue par empilement dans chaque bloc FIFO tournant approprié, alors que la lecture des données s'effectue transversalement, sur tous les blocs de données rang par rang en suivant le déplacement du pointeur de lecture 76.

La table 1 présente la correspondance entre les adresses issues des pointeurs de lecture 76 et d'écriture 72.

**TABLE 1**

| ADRESSAGE DE LA MÉMOIRE DE TRANSPOSITION | | |
|---|---|---|
| Adresse RAM 128 K | Pointeur écriture | Pointeur lecture |
| A0 | PTEO | NBO |
| A1 | PTE1 | NB1 |
| A2 | PTE2 | NB2 |
| A3 | NV0 | NITO |
| A4 | NV1 | NIT1 |
| A5 | NV2 | NIT2 |
| A6 | NV3 | NIT3 |
| A7 | NV4 | NIT4 |
| A8 | PTE3 | PTL3 |
| A9 | PTE4 | PTL4 |
| A10 | PTE5 | PTL5 |
| A11 | PTE6 | PTL6 |
| A12 | PTE7 | PTL7 |
| A13 | PTE8 | PTL8 |
| A14 | PTE9 | PTL9 |
| A15 | PTE10 | PTL10 |
| A16 | PTE11 | PTL11 |
| Légende : NVx : numéro de voie NBx : rang de bit dans le bloc ITi de la trame MIC NITx : indice i du bloc ITi de la trame MIC PTLx : pointeur lecture PTEx : pointeur écriture | | |

La lecture et l'écriture dans la mémoire s'effectuent sur 17 bits A0-A16, comme représenté sur le tableau (128 K ≈ 2¹⁷). Le pointeur écriture comporte un compteur sur 12 bits PTE0 à PTE11, au milieu desquels sont intercalés les 5 bits du registre fixe de numéro de voie NV0 à NV4. Le pointeur lecture adresse bit à bit chaque octet (NB0 à NB2), en balayant les 32 indices i des blocs ITi de chaque trame MIC (NIT0 à NIT4) pour chacune des trames MIC à émettre successivement (PTL3 à PTL11).

L'horloge émission du circuit HDLC 70 a une fréquence moyenne de 6 MHz et une fréquence instantanée de 8 MHz. Cette horloge est issue du séquenceur 89 et sert aussi d'horloge au pointeur écriture 72.

Elle présente toutefois une particularité qui permet l'asservissement du rythme d'émission au microprocesseur 67 et évite les famines. Lorsque le circuit HDLC 70 a fini de sérialiser un caractère et que le suivant n'a pas encore été écrit, le séquenceur 89 bloque l'horloge émission jusqu'à écriture du caractère suivant. De cette façon, le processeur 67 voit derrière lui un circuit asynchrone, du fait de la coopération de ce mécanisme de masquage avec la mémoire tampon 71. Cette caractéristique permet aussi de découper une trame HDLC en plusieurs blocs si l'on dispose d'un circuit HDLC 70 permettant la sauvegarde du CRC et du compteur de "1".

Le blocage de l'horloge d'émission présente également l'avantage de permettre d'émettre sur une voie quelconque non pas des trames HDLC mais une valeur répétitive fixe (par exemple un code voie libre ou un code de synchronisation ITO). Pour cela il suffit de programmer le circuit HDLC en mode caractère (sérialisation sans insertion de "0" et sans CRC) et d'émettre en une ou plusieurs fois 512 octets ayant la valeur désirée afin de remplir les 4096 bits du tampon mémoire correspondant ; le contenu de ce tampon est ensuite émis indéfiniment sur le MIC.

Le débit moyen d'écriture dans la mémoire de 6 Mbits/S à comparer avec le débit lecture de 2 Mbits/S permet de voir que même avec 31 voies actives à 1 erlang, le microprocesseur 67 émission ne consacre qu'un tiers de son temps à l'écriture des trames dans le circuit HDLC 70.

Le temps libre du microprocesseur 67 peut notamment être utilisé pour effectuer une gestion des priorités d'alimentation des blocs de la mémoire 71.

Ceci est réalisé au moyen d'un suivi par le processeur 67 des pointeurs de lecture 76 et d'écriture 72. La logique de gestion des priorités d'alimentation a pour objectif d'éviter la famine dans un des blocs, qui imposerait une interruption de la liaison MIC, puis l'obligation d'une répétition de toutes les trames en cours de transmission.

Avantageusement, le processeur 67 dispose donc d'une logique prenant en compte les paramètres suivants :
. distance séparant sur chaque bloc de mémoire le pointeur spécifique du bloc 72i du pointeur de lecture commun 76 ;
. détection des blocs où la distance pointeur-écriture/pointeur-lecture est inférieure à un seuil prédéterminé, dit "seuil de risque de famine" ;
. prise en compte, par lecture des trames source en attente dans la mémoire locale 63, de la taille des messages à transmettre sur les voies correspondantes, avant la transmission des données destinées au bloc de la mémoire 71 en risque de famine ;
. interruption du cycle normal, au cas où lesdits messages intermédiaires sont de longueur trop importante, de façon à alimenter en priorité ledit bloc en risque de famine.

Pour gérer cette logique, le processeur 67 dispose par exemple de 32 boîtes aux lettres (BAL) d'émission, correspondant chacune à une voie de transmission. Chaque boîte aux lettres est identifiée par un numéro de BAL et comporte un bit d'occupation, un ordre, et l'adresse logique de trame d'une table donnant le numéro de trame à émettre. Lorsque la BAL a été lue, le bit d'occupation est ramené à "0" et un nouvel ordre d'émission est possible sur la voie.

Une solution de substitution à la modification des priorités d'alimentation du circuit HDLC 70 par des données destinées à remplir la mémoire 71, de façon à éviter la famine dans un bloc, consiste à émettre vers ce bloc soit des fanions neutres de fin de trame, soit des trames de remplissage. Cette solution présente l'avantage de ne pas imposer de modifier la logique d'incrémentation des bits d'adressage de la mémoire 71 en écriture.

Pour le type de mémoire à 128 k. bits. représenté en figure 7, dans un mode de réalisation testé, le seuil d'alarme a été placé à 320 éléments binaires (ou bits) pour chaque bloc. La logique de scrutation des pointeurs, avec émission de trames de remplissage ou de fanions de fin de trame HDLC, comporte un temps de cycle de balayage maximum de 5 ms.

## Revendications

1. Système d'émission de trames HDLC sur canal de type MIC multivoies, le système comprenant des premiers moyens de construction de trames HDLC pour chaque voie de transmission, alimentant des seconds moyens d'insertion des trames HDLC dans un format MIC à multiplexage temporel,
caractérisé en ce que lesdits premiers et seconds moyens sont constitués par une mémoire tampon unique de transposition (71), à cycle de lecture distinct du cycle d'écriture, coopérant avec un circuit unique monovoie (70) de formatage des trames HDLC, ladite mémoire (71) étant accédée en écriture par lesdites trames HDLC formatées, et étant accédée en lecture sous commande de moyens (76) de prélèvement sélectif dans la mémoire (71) des données de construction des blocs successifs (31) des voies entrelacées de la trame MIC.

2. Système selon la revendication 1 caractérisé en ce que ladite mémoire tampon (71) comprend au moins N segments de mémoire du type FIFO tournants (80₁ à 80₃₂) correspondant aux N voies acheminées sur le canal MIC.

3. Système selon la revendication 2 caractérisé en ce que chacun desdits segments de mémoire (80₁ à 80₃₂) comporte un pointeur en écriture (72₁, 72₃₂) distinct, et en ce que ladite mémoire (71) comprend un pointeur unique de lecture (76) pour l'ensemble des segments de mémoire (80₁, 80₃₂).

4. Système selon l'une quelconque des revendications 1 à 3 caractérisé en ce qu'il inclut un module d'alimentation sélective du circuit HDLC (70), ledit module comprenant un microprocesseur (67) recevant les informations fournies par les pointeurs d'écriture (72) et de lecture (76) de ladite mémoire tampon (71).

5. Système selon la revendication 4 caractérisé en ce que ledit processeur (67) du module d'alimentation du circuit HDLC (70) coopère avec une mémoire locale (63) de stockage temporaire des données.

6. Système selon la revendication 4 caractérisé en ce que ledit processeur (67) comporte une logique d'alimentation sélective du circuit HDLC (70) avec des données permettant de remplir en priorité le segment (80₁ à 80₃₂) le plus vide de ladite mémoire tampon (71), au moins lorsque le nombre de données stockées dans ledit segment de mémoire (80₁ à 80₃₂) est inférieur à un seuil prédéterminé.

7. Système selon la revendication 4 caractérisé en ce que ledit processeur (67) du module d'alimentation et ledit circuit HDLC (70) unique coopèrent selon une relation maître/esclave respectivement, à travers un bus (60) dont le débit est déterminé par les accusés de réception émis par le circuit unique HDLC (70).

8. Système selon la revendication 4 caractérisé en ce que ledit module d'alimentation (63, 67) fournit les données octet par octet au circuit HDLC (70).

9. Système selon la revendication 8 caractérisé en ce que ledit processeur (67) du module d'alimentation fournit au circuit HDLC (70) lesdits octets de données accompagnés d'informations identifiant les octets courants, les octets de fin de trame, et les octets de synchronisation.

10. Système selon la revendication 1 caractérisé en ce qu'il comprend des moyens (82) de désactivation et d'évitement dudit circuit HDLC (70).

11. Système selon la revendication 10 caractérisé en ce que lesdits moyens (82) de désactivation et d'évitement du circuit HDLC sont activés pour le chargement des octets de synchronisation (IT0) de chaque trame MIC dans ladite mémoire tampon (71).

12. Système selon la revendication 1 caractérisé en ce qu'il comporte des moyens de masquage des coups d'horloge pilotant ledit circuit HDLC (70) et/ou les moyens de séquencement de l'écriture dans ladite mémoire tampon (71), en cas de famine d'alimentation des données au circuit HDLC (70).

13. Système selon la revendication 1 caractérisé en ce que l'accès à ladite mémoire (71) s'effectue par cycles de quatre périodes comprenant une période de lecture et trois périodes d'écriture.

## Claims

1. System for transmitting HDLC frames on a multi-channel PCM type link, the system comprising HDLC frame building first means for each transmission channel feeding second means for inserting the HDLC frames in a time-division multiplexing PCM format, characterized in that said first and second means are constituted by a single transposition buffer memory (71) with a read cycle distinct from the write cycle, cooperating with a single single-channel HDLC frame formatting circuit (70), said memory (71) being written with said formatted HDLC frames and read under the control of means (76) for selective sampling in said memory (71) of data for building successive blocks (31) of interleaved channels of said PCM frame.

2. System according to claim 1, characterized in that said buffer memory (71) comprises at least N circular FIFO type memory segments (80₁ to 80₃₂) corresponding to N channels routed onto said PCM link.

3. System according to claim 2, characterized in that each of said memory segments (80₁ to 80₃₂) comprises a respective write pointer (72₁, 72₃₂) and in that said memory (71) comprises a single read pointer (76) for all said memory segments (80₁ to 80₃₂).

4. System according to any one of claims 1 to 3, characterized in that it includes a circuit for selectively feeding said HDLC circuit (70) comprising a microprocessor (67) receiving data supplied by said write and read pointers (72, 76) of said buffer memory (71).

5. System according to claim 4, characterized in that said processor (67) of said circuit for selectively feeding said HDLC circuit (70) cooperates with a local memory (63) for temporary data storage.

6. System according to claim 4, characterized in that said processor (67) comprises a logic circuit for selectively feeding said HDLC circuit (70) with data whereby priority is given to filling the least full segment (80₁ to 80₃₂) of said buffer memory (71) at least when the quantity of data in said memory (80₁ to 80₃₂) is lower than a predetermined threshold.

7. System according to claim 4, characterized in that said processor (67) of said circuit for selectively feeding said HDLC circuit and said single HDLC circuit (70) cooperate according to a master/slave relation through a bus (60) the data signalling rate of which is determined by acknowledgments sent by said single HDLC circuit (70).

8. System according to claim 4, characterized in that said selective feed circuit (63, 67) supplies data byte by byte to said HDLC circuit (70).

9. System according to claim 8, characterized in that said processor (67) of said selective feed circuit supplies said data bytes to said HDLC circuit (70) accompanied by data identifying the current, frame end and synchronization bytes.

10. System according to claim 1, characterized in that it comprises means (82) for de-activating and bypassing said HDLC circuit (70).

11. System according to claim 10, characterized in that said de-activating and bypassing means (82) are activated for loading synchronization bytes (ITO) of each PCM frame into said buffer memory (71).

12. System according to claim 1, characterized in that it comprises means for masking clock signals controlling said HDLC circuit (70) and/or means for sequencing writing in said buffer memory (71) in case of data starvation in the feed to said HDLC circuit (70).

13. System according to claim 1, characterized in that said memory (71) is accessed by four-period cycles comprising a read period and three write periods.

## Patentansprüche

1. HDLC-Rahmensendesystem auf einem Kanal von PCM-Vielfachkanaltyp, wobei das System erste Mittel zur Konstruktion von HDLC-Rahmen für jeden Übertragungskanal aufweist, die zweite Mittel zur Einfügung der HDLC-Rahmen in ein PCM-Format mit Zeitmultiplexierung versorgen, dadurch gekennzeichnet, daß die ersten und zweiten Mittel aus einem gemeinsamen Transpositions-Pufferspeicher (71) mit vom Schreibzyklus getrenntem Lesezyklus bestehen, der mit einem gemeinsamen Einkanalkreis (70) zur Formatierung der HDLC-Rahmen zusammenwirkt, wobei der Zugriff zum Speicher (71) beim Schreiben durch die formatierten HDLC-Rahmen und beim Lesen unter Steuerung durch Mittel (76) erfolgt, die selektiv aus dem Speicher (71) Daten zum Aufbau der aufeinanderfolgenden Blöcke (31) der verschachtelten Kanäle im PCM-Rahmen entnehmen.

2. System nach Anspruch 1, dadurch gekennzeichnet, daß der Pufferspeicher (71) mindestens N Speichersegmente vom Typ eines rotierenden FIFO (80₁ bis 80₃₂) entsprechend den N auf dem PCM-Kanal verlaufenden Kanälen aufweist.

3. System nach Anspruch 2, dadurch gekennzeichnet, daß jedes der Speichersegmente (80₁ bis 80₃₂) einen eigenen Schreibzeiger (72₁, 72₃₂) enthält, und daß der Speicher (71) für alle Speichersegmente (80₁ bis 80₃₂) einen gemeinsamen Lesezeiger (76) aufweist.

4. System nach einem beliebigen der Ansprüche 1 bis 3, dadurch gekennzeichnet, daß es einen selektiven Versorgungsmodul für den HDLC-Kreis (70) mit einem Prozessor (67) enthält, der die von den Schreib- (72) und Lesezeigern (76) des Pufferspeichers (71) gelieferten Informationen empfängt.

5. System nach Anspruch 4, dadurch gekennzeichnet, daß der Prozessor (67) des Versorgungsmoduls für den HDLC-Kreis (70) mit einem örtlichen Speicher (63) zur vorübergehenden Speicherung der Daten zusammenwirkt.

6. System nach Anspruch 4, dadurch gekennzeichnet, daß der Prozessor (67) eine Logik zur selektiven Versorgung des HDLC-Kreises (70) mit Daten enthält, die bevorzugt das leerste Segment (80₁ bis 80₃₂) des Pufferspeichers (71) zu füllen vermag, zumindest wenn die Anzahl der in dem Speichersegment (80₁ bis 80₃₂) gespeicherten Daten unter einer vorgegebenen Schwelle liegt.

7. System nach Anspruch 4, dadurch gekennzeichnet, daß der Prozessor (67) des Versorgungsmoduls und der gemeinsame HDLC-Kreis (70) gemäß einer Meister-Sklaven-Struktur über einen Bus (60) zusammenwirken, dessen Durchsatz durch die vom gemeinsamen HDLC-Kreis (70) ausgesandten Empfangsbestätigungen bestimmt wird.

8. System nach Anspruch 4, dadurch gekennzeichnet, daß der Versorgungsmodul (63, 67) die Daten Oktett für Oktett an den HDLC-Kreis (70) liefert.

9. System nach Anspruch 8, dadurch gekennzeichnet, daß der Prozessor (67) des Versorgungsmoduls dem HDLC-Kreis (70) die Datenoktette zusammen mit Informationen liefert, die die laufenden Oktette, die Oktette am Ende des Rahmens und die Synchronisationsoktette identifizieren.

10. System nach Anspruch 1, dadurch gekennzeichnet, daß es Mittel (82) zum Abschalten und Umgehen des HDLC-Kreises (70) aufweist.

11. System nach Anspruch 10, dadurch gekennzeichnet, daß die Mittel (82) zum Abschalten und Umgehen des HDLC-Kreises aktiviert werden, um das Synchronisationsoktett (ITO) jedes PCM-Rahmens in den Pufferspeicher (71) zu laden.

12. System nach Anspruch 1, dadurch gekennzeichnet, daß es Mittel enthält, um Taktimpulse auszublenden, die den HDLC-Kreis (70) und/oder die Folgeschaltungsmittel beim Schreiben in den Pufferspeicher (71) im Fall eines Datenmangels am Eingang zu den HDLC-Kreisen (70) steuern.

13. System nach Anspruch 1, dadurch gekennzeichnet, daß der Zugang zum Speicher (71) über Zyklen von vier Perioden geschieht, die eine Leseperiode und drei Schreibperioden enthalten.
